# DEMANDE DE BREVET EUROPEEN

(11) **EP 4 450 936 A1**
(43) Date de publication de la demande: **23.10.2024**
(21) Numéro de dépôt: 24170255.4
(22) Date de dépôt: 15.04.2024
(51) Int. Cl.: G01K 1/14, F02C 7/00, G01K 1/143, G01K 1/16, G01K 1/20, G01K 17/00, G01J 5/00

(54) **SYSTÈME DE MESURE D'AU MOINS UNE GRANDEUR THERMIQUE CONFIGURÉ POUR LIMITER L'IMPACT DES TRANSFERTS THERMIQUES PAR CONVECTION**

(30) Priorité: 20.04.2023 FR 2303946
(71) Demandeur: AIRBUS OPERATIONS (S.A.S.), 31060 Toulouse (FR)
(72) Inventeur: FLEMIN, Christian, 31060 TOULOUSE (FR)
(74) Mandataire: Fantin, Laurent

(57) **Abrégé**

L'invention a pour objet un système de mesure (38) d'au moins une grandeur thermique en un point d'un ensemble de propulsion d'un aéronef. Le système de mesure (38) est configuré pour être relié à une structure (40) solidaire de l'ensemble de propulsion et comprend au moins un capteur thermique (42) ainsi qu'au moins une barrière (44) transparente aux rayonnements infrarouges dans au moins une zone de ladite barrière (44), cette dernière délimitant au moins partiellement une cavité (54) dans laquelle est positionné le capteur thermique (42).

Cette solution permet de filtrer les flux thermiques et de limiter l'impact des flux thermiques par convection sur la mesure de la grandeur thermique.

L'invention a également pour objet un ensemble de propulsion d'aéronef comprenant au moins un tel système de mesure (38).

## Description

La présente demande se rapporte à un système de mesure d'au moins une grandeur thermique comme une température ou un flux thermique ainsi qu'à un ensemble de propulsion d'aéronef comportant au moins un tel système.

Selon un mode de réalisation, un ensemble de propulsion d'un aéronef comprend une motorisation ainsi qu'une nacelle positionnée autour de la motorisation et configurée pour canaliser un flux d'air primaire dans la motorisation et un flux d'air secondaire entre la motorisation et la nacelle. En fonctionnement, la motorisation génère des températures d'environnement radiatif interne et des températures d'air interne très élevées de l'ordre de plusieurs centaines de degrés. Pour fonctionner correctement, certains équipements situés dans la motorisation ou la nacelle, sensibles aux températures élevées, sont protégés par des éléments de protection comme des écrans thermiques, des isolations thermiques et/ou des systèmes de dissipation et de refroidissement thermiques comme des radiateurs par exemple. La conception de tels éléments de protection nécessite de déterminer précisément les flux thermiques par rayonnement susceptibles d'impacter les équipements sensibles aux températures élevées, l'évolution de la température d'environnement radiatif interne ou l'évolution de la température de l'air dans les zones où ils sont implantés afin d'optimiser la masse de ces éléments de protection, le choix des matériaux et ne pas les surdimensionner pour limiter les coûts et l'impact sur les performances de l'ensemble de propulsion de l'aéronef. Durant l'exploitation de l'aéronef, les systèmes de dissipation et de refroidissement thermiques peuvent induire des perturbations aérodynamiques. Par conséquent, il est important, lors de l'exploitation de l'aéronef, de déterminer précisément les flux thermiques par rayonnement susceptibles d'impacter les équipements sensibles aux températures élevées, l'évolution de la température d'environnement radiatif ou l'évolution de la température de l'air dans les zones où ils sont implantés afin d'optimiser le fonctionnement de ces systèmes de dissipation et de refroidissement thermiques.

Selon un mode de réalisation, un thermocouple ou une sonde de température telle qu'une thermistance est utilisé pour mesurer la température en un point donné. Selon un autre mode de réalisation, un capteur de flux thermique est utilisé pour mesurer le flux thermique absorbé par rayonnement et/ou par conduction. Ces modes de réalisation de conception simple ne sont pas satisfaisants car ils ne permettent pas de mesurer précisément une grandeur thermique comme une température de peau d'un équipement ou un flux thermique absorbé par rayonnement en un point notamment si ce point est situé dans un environnement impacté par des flux thermiques par convection complexes comme dans un ensemble de propulsion. La présente invention vise à remédier à tout ou partie des inconvénients précités.

A cet effet, l'invention a pour objet un système de mesure d'au moins une grandeur thermique, le système de mesure étant configuré pour être relié à une structure et comprenant au moins un capteur thermique.

Selon l'invention, le système de mesure comprend au moins une barrière transparente aux rayonnements infrarouges dans au moins une zone de ladite barrière, cette dernière délimitant au moins partiellement une cavité dans laquelle est positionné le capteur thermique et présentant un facteur de forme supérieur ou égal à 0,8.

Cette solution permet de filtrer les flux thermiques, notamment les flux thermiques conductifs parasites, impactant le capteur thermique et de le protéger au moins des flux thermiques par convection. Ainsi, il est possible de déterminer précisément la température en un point situé dans un ensemble de propulsion d'un aéronef ou le flux thermique par rayonnement impactant ce point.

Selon une autre caractéristique, la cavité contient une atmosphère contrôlée présentant au moins une caractéristique parmi un niveau de vide élevé, un taux de remplissage en gaz inerte élevé, un faible taux d'hygrométrie et un faible niveau de polluants.

Selon une autre caractéristique, la barrière présente une transmittance supérieure ou égale à 80% pour des rayons présentant une longueur d'ondes comprise entre 0,7 µm et 12 µm. Selon une autre caractéristique, la barrière présente une épaisseur inférieure ou égale à 1 mm.

Selon une autre caractéristique, le système de mesure comprend un support qui s'étend entre des première et deuxième extrémités, le capteur thermique étant fixé à la première extrémité. En complément, la barrière comprend un orifice configuré pour permettre au support de la traverser, le système de mesure comprenant au moins un système d'étanchéité reliant le support et la barrière au droit de l'orifice.

Selon une autre caractéristique, le capteur thermique est accolé à la structure et relié à cette dernière par au moins un élément à conductivité thermique élevée.

Selon une autre caractéristique, la barrière forme une coque qui présente une périphérie reliée de manière étanche à la structure de sorte à délimiter la cavité dans laquelle est positionné le capteur thermique.

Selon une autre caractéristique, la coque comprend au moins une couche réalisée en un matériau poreux ou nanoporeux, transparent aux rayonnements infrarouges.

Selon une autre caractéristique, la barrière forme une enveloppe fermée entourant le capteur thermique et délimitant la cavité dans laquelle est positionné le capteur thermique.

Selon une autre caractéristique, le capteur thermique est distant de la structure et isolé de cette dernière en matière de flux thermique par conduction.

Selon une autre caractéristique, l'enveloppe fermée comprend au moins une première partie qui présente une face intérieure orientée vers le capteur thermique positionné dans l'enveloppe fermée et une face extérieure orientée vers la structure. En complément, le système de mesure comprend une première interface reliant le capteur thermique et la face intérieure ainsi qu'une deuxième interface reliant la structure et la face extérieure, les première et deuxième interfaces présentant une conductivité élevée, la première partie de l'enveloppe fermée étant réalisée en un matériau présentant une conductivité thermique élevée.

Selon une autre caractéristique, la première partie de l'enveloppe fermée est configurée pour être opaque aux rayonnements infrarouges et avoir une émissivité pour les rayonnements infrarouges proche de ou égale à celle du matériau de la structure.

L'invention a également pour objet un ensemble de propulsion d'aéronef comportant au moins un système de mesure d'au moins une grandeur thermique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une coupe longitudinale d'une partie d'un ensemble de propulsion,
- La figure 2 est une représentation schématique d'un système de mesure d'au moins une grandeur thermique illustrant un mode de réalisation de l'invention,
- La figure 3 est une représentation schématique d'un système de mesure d'au moins une grandeur thermique illustrant un autre mode de réalisation de l'invention,
- La figure 4 est une représentation schématique d'un système de mesure d'au moins une grandeur thermique illustrant un autre mode de réalisation de l'invention, et
- La figure 5 est une représentation schématique d'un système de mesure d'au moins une grandeur thermique illustrant un autre mode de réalisation de l'invention.

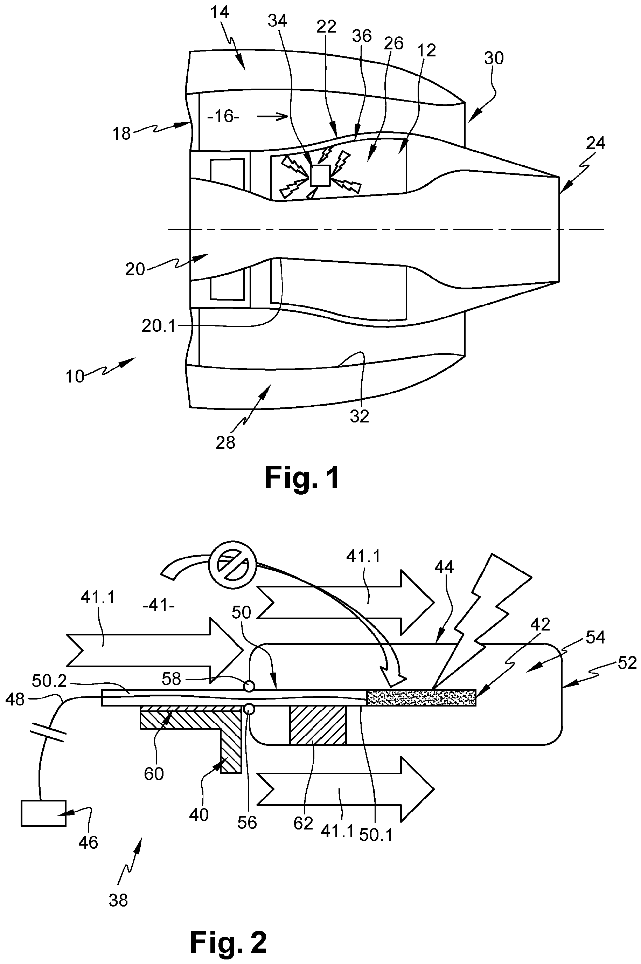

Selon un mode de réalisation visible sur la figure 1, un aéronef comprend au moins un ensemble de propulsion 10 comportant une motorisation 12, une nacelle 14 positionnée autour de la motorisation 12 ainsi qu'un conduit annulaire 16 situé entre la motorisation 12 et la nacelle 14.

La motorisation 12 comprend, de l'avant vers l'arrière, une soufflante 18, un coeur de moteur 20 délimité par une enveloppe 20.1, une paroi externe 22 entourant le coeur de moteur 20, distante de son enveloppe 20.1, ainsi qu'une première tuyère 24 prolongeant le coeur de moteur 20. La paroi externe 22 est également appelée structure interne fixe ou IFS (pour Inner fixed structure en anglais). La motorisation 12 comprend une zone intermédiaire 26 (appelée core zone en anglais) positionnée entre l'enveloppe 20.1 du coeur de moteur 20 et la paroi externe 22.

La nacelle 14 comprend une entrée d'air en amont de la motorisation 12, une partie intermédiaire destinée à entourer la soufflante, une partie arrière 28 pouvant intégrer des moyens d'inversion de poussée, positionnée autour de la paroi externe 22 et généralement terminée par une deuxième tuyère 30. La nacelle 14 présente également une paroi interne 32 (appelée Inner Fixed Structure en anglais) espacée de la motorisation 12, notamment de sa paroi externe 22.

En fonctionnement, un flux primaire circule dans le coeur de moteur 20 et sort via la première tuyère 24. Un flux secondaire sortant de la soufflante 18 circule dans le conduit annulaire 16 délimité par la paroi externe 22 de la motorisation 12 et la paroi interne 32 de la nacelle 14. Les flux primaire et secondaire sont éjectés via les première et deuxième tuyères 24, 30. La paroi externe 22 de la motorisation 12 sépare une zone chaude à l'intérieur de la motorisation 12, dans la zone intermédiaire 26, et une zone froide à l'extérieur de la motorisation 12, dans le conduit annulaire 16. Selon un agencement, l'ensemble de propulsion 10 comprend au moins un équipement 34 positionné dans cette zone intermédiaire 26.

Selon un mode de réalisation, l'ensemble de propulsion 10 comprend au moins un élément de protection thermique 36 comme un système de refroidissement par convection configuré pour ventiler la zone intermédiaire 26 et envoyer de l'air froid de la zone froide vers la zone chaude et/ou un écran thermique pour limiter l'impact des transferts thermiques par rayonnement sur l'équipement 34. Cet écran thermique peut être fixé directement sur l'équipement 34 ou sur l'enveloppe 20.1 du coeur de moteur 20. Il peut être positionné au niveau de différentes zones de l'ensemble de propulsion 10.

L'ensemble de propulsion 10, la motorisation 12 et la nacelle 14 ne sont pas plus décrits car ils peuvent être identiques à ceux de l'art antérieur. Quel que soit le mode de réalisation, l'ensemble de propulsion 10 comprend au moins un équipement 34 sensible aux températures élevées ainsi qu'au moins un élément de protection thermique 36.

Comme illustré sur les figures 2 à 5, l'ensemble de propulsion 10 comprend au moins un système de mesure 38 d'au moins une grandeur thermique, ladite grandeur thermique étant choisie parmi notamment une température, un flux thermique par rayonnement. Ce système de mesure 38 est relié à une structure 40 solidaire de l'ensemble de propulsion 10 et positionné dans un environnement 41, notamment un environnement convectif, présentant un flux d'air 41.1 matérialisé par des flèches. Ce flux d'air 41.1 peut véhiculer au moins un flux thermique par convection complexe dans trois dimensions. Par structure 40, on entend une structure, la peau d'une structure, un équipement ou tout autre élément de l'ensemble de propulsion 10.

Ce système de mesure 38 comprend au moins un capteur thermique 42 configuré pour déterminer au moins une grandeur thermique ainsi qu'au moins une barrière 44 transparente aux rayonnements infrarouges dans au moins une zone de ladite barrière 44, ladite barrière 44 étant configurée pour isoler le capteur thermique 42 du flux d'air 41.1. Cette barrière 44 permet de protéger le capteur thermique 42 d'éventuels polluants et/ou de flux thermiques par convection véhiculés notamment par le flux d'air 41.1 et de limiter l'impact de ces derniers sur la mesure de chaque grandeur par le capteur thermique 42.

Selon une configuration, le capteur thermique 42 est un thermocouple, une thermistance ou un capteur de flux thermique. Selon un mode de réalisation, le capteur thermique 42 est configuré pour convertir une première grandeur physique comme la température ou un flux thermique en une deuxième grandeur physique comme un courant électrique. Le système de mesure 38 comprend au moins un système d'analyse 46 distant du capteur thermique 42 ainsi qu'au moins un câble électrique 48 reliant le capteur thermique 42 et le système d'analyse 46. Pour la présente demande, les rayons infrarouges présentent des longueurs d'onde comprises entre 0,7 µm et 12 µm.

Selon un mode de réalisation, la barrière 44 est réalisée en un matériau configuré pour transmettre au moins 80% des rayons infrarouges. Le matériau de la barrière 44 présente une faible conductivité thermique inférieure ou égale à 1,5 W/m.K. Selon une configuration, la barrière 44 présente une transmittance (ou coefficient de transmission) la plus élevée possible, supérieure ou égale à 80%, de préférence supérieure ou égale à 90% et la plus proche de 100%, pour des rayons présentant une longueur d'ondes comprise entre 0,7 µm et 12 µm correspondant aux rayonnements infrarouges.

Le matériau de la barrière 44 est choisi parmi les matériaux suivants : une vitrocéramique transparente comme SrᵢAlⱼSₖO₈, CaF₂, AION, GaᵢGeⱼSₖ TeᵢNbⱼBᵢₖ , KBr, BaO-GeO₂-Ga₂O₃, un polycarbonate, Teᵢ-Asⱼ-Geₖ, CaLa₂S₄, un verre de type BK7, un quartz Q2, un zinc selenide, ... Cette liste de matériaux n'est pas exhaustive.

Selon une configuration, la barrière 44 présente une épaisseur inférieure ou égale à 1 mm.

Selon un mode de réalisation visible sur les figures 2 à 5, le système de mesure 38 comprend au moins une gaine 50 qui s'étend entre des première et deuxième extrémités 50.1, 50.2, le capteur thermique 42 étant fixé à la première extrémité 50.1, la gaine 50 traversant la barrière 44. Cette gaine 50 est plus ou moins rigide. Lorsqu'elle est rigide, elle peut assurer la fonction de support configuré pour supporter le capteur thermique 42 et la barrière 44. Chaque câble électrique 48 chemine dans la gaine 50. Cette dernière est généralement isolée électriquement.

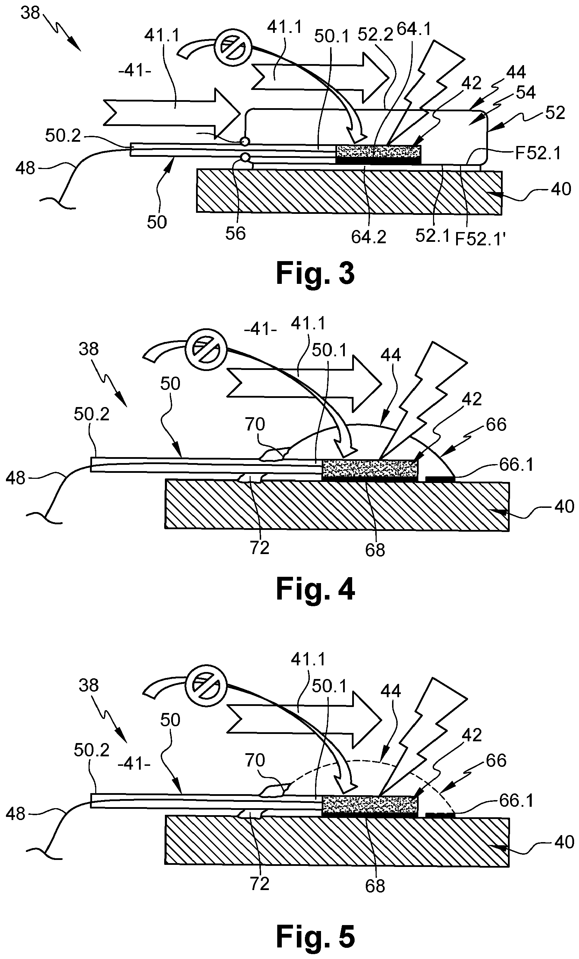

Selon des modes de réalisation visibles sur les figures 2 et 3, la barrière 44 forme une enveloppe fermée 52, entourant le capteur thermique 42, délimitant une cavité 54 dans laquelle est positionné le capteur thermique 42. Selon un agencement, l'enveloppe fermée 52 est cylindrique. Bien entendu, l'invention n'est pas limitée à cette forme géométrique. Selon une configuration, la cavité 54 est mise au vide ou contient un gaz inerte. Selon une configuration, la barrière 44 formée par l'enveloppe fermée 52 comprend un orifice 56 configuré pour permettre à la gaine 50 de la traverser. En complément, le système de mesure 38 comprend au moins un système d'étanchéité 58 reliant la gaine 50 et la barrière 44 au droit de l'orifice 56 de manière à fermer la cavité 54 de manière étanche.

Selon un mode de réalisation visible sur la figure 2, l'enveloppe fermée 52 est distante de la structure 40. Selon ce mode de réalisation, la gaine 50 assure la fonction de support et sa deuxième extrémité 50.2 est reliée à la structure 40. A cet effet, le système de mesure 38 comprend au moins un élément de liaison 60 reliant la gaine 50 et la structure 40, comme de la colle, du mastic, au moins un rivet, au moins un boulon, au moins une vis ou autre.

Selon un agencement, la structure 40, la gaine 50 et/ou l'élément de liaison 60 est (ou sont) réalisé(s) en un matériau à faible conductivité thermique. Cette solution permet de filtrer les flux thermiques en ne laissant pas passer les flux thermiques par conduction entre la structure 40 et le capteur thermique 42.

Selon un mode de réalisation, le système de mesure 38 comprend un élément de liaison 62 en un matériau à faible conductivité thermique pour relier d'une part l'enveloppe fermée 52 et d'autre part la gaine 50 et/ou le capteur thermique 42. Cette solution permet de filtrer les flux thermiques en isolant le capteur thermique 42 des flux thermiques par conduction à travers les fils 48 et la gaine 50.

Selon le mode de réalisation visible sur la figure 2, l'enveloppe fermée 52 est entièrement réalisée en un matériau transparent aux rayonnements infrarouges. Cette enveloppe fermée 52 permet de filtrer les flux thermiques en ne laissant passer que les flux thermiques par rayonnement et en isolant le capteur thermique 42 des flux thermiques par convection. Le capteur thermique 42 étant isolé sur le plan de la conduction thermique de l'enveloppe fermée 52, il n'est pas impacté par les flux thermiques par conduction.

Selon un autre mode de réalisation visible sur la figure 3, l'enveloppe fermée 52 comprend au moins une première partie 52.1 qui présente une face intérieure F52.1 orientée vers le capteur thermique 42 positionné dans l'enveloppe fermée 52 et une face extérieure F52.1' orientée vers la structure 40. La première partie 52.1 est conformée comme la structure 40 de manière à épouser ses formes et à être intimement plaquée contre ladite structure 40. Ainsi, la première partie 52.1 de l'enveloppe fermée 52 est intercalée entre la structure 40 et le capteur thermique 42.

Selon le mode de réalisation visible sur la figure 3, l'enveloppe fermée 52 est en contact avec la structure 40. Le système de mesure 38 comprend une première interface 64.1 reliant le capteur thermique 42 et la face intérieure F52.1 ainsi qu'une deuxième interface 64.2 reliant la structure 40 et la face extérieure F52.1', les première et deuxième interfaces 64.1, 64.2 présentant une conductivité élevée de manière à ne pas filtrer les flux thermiques par conduction entre la structure 40 et le capteur thermique 42.

Selon un agencement, les première et deuxième interfaces 64.1, 64.2 présentent une épaisseur inférieure ou égale à 0,2 mm. A titre d'exemple, les première et deuxième interfaces 64.1, 64.2 sont obtenues par collage en utilisant une colle présentant une conductivité thermique assez élevée et supérieure ou égale à 0,2 W/m.K. Bien entendu, l'invention n'est pas limitée à ce mode de réalisation pour les première et deuxième interfaces 64.1, 64.2. Selon une première configuration, contrairement au mode de réalisation visible sur la figure 2, l'enveloppe fermée 52 n'est pas réalisée dans un même matériau transparent aux rayonnements infrarouges. La partie 52.1 est réalisée en un premier matériau présentant une conductivité thermique élevée alors que le reste de l'enveloppe fermée 52, appelé deuxième partie 52.2, est réalisée en un matériau transparent aux rayonnements infrarouges, à faible conductivité thermique. Selon une variante, la première partie 52.1 est réalisée en un matériau opaque aux rayonnements infrarouges, ayant une émissivité pour les rayonnements infrarouges proche de ou égale à celle du matériau de la structure 40. Lorsque le système de mesure 38 peut être impacté par les rayons solaires, la deuxième partie 52.2 peut être réalisée en un matériau filtrant les rayons solaires mais laissant passer les rayonnements infrarouges. Selon une deuxième configuration, l'enveloppe fermée 52 est réalisée dans sa totalité en un matériau transparent aux rayonnements infrarouges et au moins une face parmi les faces intérieure et extérieure F52.1, F52.1' de la partie 52.1 est recouverte d'un revêtement opaque aux rayonnements infrarouges, ledit revêtement étant réalisé en un matériau ayant une émissivité pour les rayonnements infrarouges proche de ou égale à celle du matériau de la structure 40. Selon les première et deuxième configurations, la partie 52.1 de l'enveloppe fermée 52 est configurée pour être opaque aux rayonnements infrarouges et avoir une émissivité pour les rayonnements infrarouges proche de ou égale à celle du matériau de la structure 40.

Le mode de réalisation visible sur la figure 3 permet de réduire le gradient de température entre la structure 40 et le capteur thermique 42. Il est plus particulièrement adapté pour mesurer la température d'une zone en surface de la structure 40 positionnée au droit du capteur thermique 42 ou pour mesurer un flux thermique échangé par une zone en surface de la structure 40 positionnée au droit du capteur thermique 42.

Selon les modes de réalisation visibles sur les figures 2 et 3, le capteur thermique 42 relié à la gaine 50 est introduit dans l'enveloppe fermée 52. Selon le mode de réalisation visible sur la figure 3, le capteur thermique 42 est relié à l'enveloppe fermée 52. Après la mise au vide ou le remplissage de l'enveloppe fermée 52 avec un gaz inerte, le système d'étanchéité 58 est mis en place de manière à fermer la cavité 54 de manière étanche. En suivant, la gaine 50 est reliée à la structure 40 selon le mode de réalisation visible sur la figure 2 ou l'enveloppe fermée 52 est reliée à la structure 40 selon le mode de réalisation visible sur la figure 3. Selon des modes de réalisation visibles sur les figures 4 et 5, la barrière 44 forme une coque 66 qui présente une périphérie 66.1 reliée de manière étanche à la structure 40 de sorte à délimiter une cavité 54 étanche dans laquelle est positionné le capteur thermique 42. Selon un agencement, la coque 66 présente une forme demi-sphérique. Bien entendu, l'invention n'est pas limitée à cette forme pour la coque 66.

Selon une configuration, le système de mesure 38 comprend au moins une liaison 68 reliant le capteur thermique 42 et la structure 40, la barrière 44 n'étant pas intercalée entre le capteur thermique 42 et la structure 40. Selon un agencement, cette liaison 68 est conductrice thermiquement.

Selon une configuration, la barrière 44 formée par la coque 66 comprend un orifice 70 configuré pour permettre à la gaine 50 de la traverser. En complément, le système de mesure 38 comprend au moins un système d'étanchéité 72 reliant la gaine 50 et la barrière 44 au droit de l'orifice 70 de manière à fermer la cavité 54 de manière étanche.

Selon un mode de réalisation visible sur la figure 4, la coque 66 est réalisée en un matériau transparent aux rayonnements infrarouges, ce matériau étant non poreux.

Selon ce mode de réalisation, après la fixation du capteur thermique 42 sur la structure 40, la coque 66 est reliée à la structure 40 dans une atmosphère contrôlée de manière à ce que l'air emprisonné entre la coque 66 et la structure 40 présente un faible taux d'hygrométrie et un faible niveau de polluants à pression atmosphérique au sol.

Selon un mode de réalisation visible sur la figure 5, la coque 66 est perméable aux liquides tout en réduisant drastiquement l'effet de la convection avec l'air de la zone située à l'extérieur de la barrière 44. Cette solution permet d'obtenir une barrière 44 drainante permettant l'évacuation d'éventuels liquides présents dans la cavité 54.

Selon une configuration, la coque 66 comprend une unique couche réalisée en un matériau poreux ou nanoporeux, transparent aux rayonnements infrarouges. Selon une autre configuration, la coque 66 comprend une première couche perforée réalisée en un matériau transparent aux rayonnements infrarouges ainsi qu'une deuxième couche recouvrant la première couche, réalisée en un matériau poreux ou nanoporeux, transparent aux rayonnements infrarouges.

A titre d'exemple, la coque 66 est réalisée en verre nanostructuré revêtu de SiO₂ ou d'ITO, en polycarbonate revêtu d'AR ou en matériau nanoporeux comme la vitrocéramique de chalcogénures. Cette liste n'est pas exhaustive.

Quel que soit le mode de réalisation, le système de mesure 38 d'au moins une grandeur thermique est configuré pour être relié à une structure 40 et positionné dans au moins un flux thermique par convection. Il comprend au moins un capteur thermique 42 ainsi qu'au moins une barrière 44 transparente aux rayonnements infrarouges dans au moins une zone de ladite barrière 44, la barrière 44 délimitant au moins partiellement une cavité 54 dans laquelle est positionné le capteur thermique 42. Cette solution permet de filtrer les flux thermiques impactant le capteur thermique 42 et de le protéger au moins des flux thermiques par convection. Le capteur thermique 42 est choisi parmi les capteurs thermiques de conception simple et fiable.

Selon une configuration, la cavité 54 contient une atmosphère contrôlée présentant au moins une caractéristique parmi un niveau de vide élevé, un taux de remplissage en gaz inerte élevé, un faible taux d'hygrométrie et un faible niveau de polluants.

Selon un premier mode de réalisation, le capteur thermique 42 est distant d'une structure 40 de l'ensemble de propulsion 10 et isolé de cette dernière sur le plan des flux thermiques par conduction. Selon ce premier mode de réalisation, le capteur thermique est impacté par les flux thermiques par rayonnement et protégé des flux thermiques par convection et par conduction. Ce mode de réalisation est plus particulièrement adapté pour déterminer précisément l'impact des flux thermiques par rayonnement en un point donné de l'ensemble de propulsion 10 distant de la structure 40, en limitant les perturbations liées à d'éventuels polluants et/ou aux flux thermiques par convection et par conduction.

Selon d'autres modes de réalisation, le capteur thermique 42 est accolé à une structure 40 d'un ensemble de propulsion 10 et relié à cette dernière par au moins un élément à conductivité thermique élevée limitant l'apparition d'un gradient thermique entre le capteur thermique 42 et la structure 40. Ce mode de réalisation est plus particulièrement adapté pour déterminer précisément la température ou le flux thermique échangé en un point donné à la surface de la structure 40, au droit duquel est positionné le capteur thermique 42, en limitant les perturbations liées à d'éventuels polluants et/ou aux flux thermiques par convection. Bien entendu, l'invention n'est pas limitée aux modes de réalisation précédemment décrits. La barrière 44 peut avoir différentes formes (autres que cylindrique ou demi-sphérique). Quelque soit le mode de réalisation, contrairement à des systèmes de mesure de l'art antérieur qui comprennent une barrière sous la forme d'un hublot limitant les directions des rayonnements impactant le capteur thermique 42, la barrière 44 présente un facteur de forme supérieur ou égal à 0,8. Ainsi, le capteur thermique 42 peut recevoir des rayonnements provenant d'une multitude de directions et d'un plus grand angle solide par rapport aux solutions de l'art antérieur.

## Revendications

1. Système de mesure (38) d'au moins une grandeur thermique, le système de mesure (38) étant configuré pour être relié à une structure (40) et comprenant au moins un capteur thermique (42), **caractérisé en ce que** le système de mesure (38) comprend au moins une barrière (44) transparente aux rayonnements infrarouges dans au moins une zone de ladite barrière (44), la barrière (44) délimitant au moins partiellement une cavité (54) dans laquelle est positionné le capteur thermique (42) et présentant un facteur de forme supérieur ou égal à 0,8.

2. Système de mesure (38) d'au moins une grandeur thermique selon la revendication précédente, **caractérisé en ce que** la cavité (54) contient une atmosphère contrôlée présentant au moins une caractéristique parmi un niveau de vide élevé, un taux de remplissage en gaz inerte élevé, un faible taux d'hygrométrie et un faible niveau de polluants.

3. Système de mesure (38) d'au moins une grandeur thermique selon l'une des revendications précédentes, **caractérisé en ce que** la barrière (44) présente une transmittance supérieure ou égale à 80% pour des rayons présentant une longueur d'ondes comprise entre 0,7 µm et 12 µm.

4. Système de mesure (38) d'au moins une grandeur thermique selon l'une des revendications précédentes, **caractérisé en ce que** la barrière (44) présente une épaisseur inférieure ou égale à 1 mm.

5. Système de mesure (38) d'au moins une grandeur thermique selon l'une des revendications précédentes, **caractérisé en ce que** le système de mesure (38) comprend une gaine (50) qui s'étend entre des première et deuxième extrémités (50.1, 50.2), le capteur thermique (42) étant fixé à la première extrémité (50.1), **en ce que** la barrière (44) comprend un orifice (56, 70) configuré pour permettre à la gaine (50) de la traverser et **en ce que** le système de mesure (38) comprend au moins un système d'étanchéité (58, 72) reliant la gaine (50) et la barrière (44) au droit de l'orifice (56).

6. Système de mesure (38) d'au moins une grandeur thermique selon l'une des revendications précédentes, **caractérisé en ce que** le capteur thermique (42) est accolé à la structure (40) et relié à cette dernière par au moins un élément à conductivité thermique élevée.

7. Système de mesure (38) d'au moins une grandeur thermique selon la revendication précédente, **caractérisé en ce que** la barrière (44) forme une coque (66) qui présente une périphérie (66.1) reliée de manière étanche à la structure (40) de sorte à délimiter la cavité (54) dans laquelle est positionné le capteur thermique (42).

8. Système de mesure (38) d'au moins une grandeur thermique selon la revendication précédente, **caractérisé en ce que** la coque (66) comprend au moins une couche réalisée en un matériau poreux ou nanoporeux, transparent aux rayonnements infrarouges.

9. Système de mesure (38) d'au moins une grandeur thermique selon l'une des revendications 1 à 5, **caractérisé en ce que** la barrière (44) forme une enveloppe fermée (52) entourant le capteur thermique (42) et délimitant la cavité (54) dans laquelle est positionné le capteur thermique (42).

10. Système de mesure (38) d'au moins une grandeur thermique selon la revendication précédente, **caractérisé en ce que** le capteur thermique (42) est distant de la structure (40) et isolé de cette dernière en matière de flux thermique par conduction.

11. Système de mesure (38) d'au moins une grandeur thermique selon la revendication 9, **caractérisé en ce que** l'enveloppe fermée (52) comprend au moins une première partie (52.1) qui présente une face intérieure (F52.1) orientée vers le capteur thermique (42) positionné dans l'enveloppe fermée (52) et une face extérieure (F52.1') orientée vers la structure (40), **en ce que** le système de mesure (38) comprend une première interface (64.1) reliant le capteur thermique (42) et la face intérieure (F52.1) ainsi qu'une deuxième interface (64.2) reliant la structure (40) et la face extérieure (F52.1'), les première et deuxième interfaces (64.1, 64.2) présentant une conductivité élevée et **en ce que** la première partie (52.1) de l'enveloppe fermée (52) est réalisée en un matériau présentant une conductivité thermique élevée.

12. Système de mesure (38) d'au moins une grandeur thermique selon la revendication précédente, **caractérisé en ce que** la première partie (52.1) de l'enveloppe fermée (52) est configurée pour être opaque aux rayonnements infrarouges et avoir une émissivité pour les rayonnements infrarouges proche de ou égale à celle du matériau de la structure (40).

13. Ensemble de propulsion d'aéronef comportant au moins un système de mesure (38) d'au moins une grandeur thermique selon l'une des revendications précédentes.
